# EUROPEAN PATENT SPECIFICATION

(11) **EP 3 269 775 B1**
(45) Date of publication and mention of the grant of the patent: **02.12.2020**
(21) Application number: 17180483.4
(22) Date of filing: 10.07.2017
(51) Int. Cl.: C08L 83/06, C09D 163/00, C08G 59/50

(54) **PRIMER FOR AN ADHESIVE**
PRIMER FÜR EIN KLEBSTOFF
PRIMER POUR UN ADHÉSIF

(30) Priority: 12.07.2016 NL 2017155
(43) Date of publication of application: 17.01.2018
(73) Proprietor: Strongbond B.V., 7091 CM Dinxperlo (NL)
(72) Inventor: WENNEKES, Wilco Bernardus, 7091 CM Dinxperlo (NL); DE BLOCK, Rudolph Frank, 7091 CM Dinxperlo (NL)
(74) Representative: Van Breda, Jacobus

(56) References cited:
- EP-A1- 1 905 805
- EP-A2- 0 501 916
- WO-A2-2015/082409
- JP-A- H01 172 467
- JP-A- 2007 070 585
- US-A1- 2011 027 591

## Description

### FIELD OF THE INVENTION

The present invention is in the field of a primer for an adhesive, use of said primer, and a method for forming said primer.

### BACKGROUND OF THE INVENTION

The present invention is in the field of a primer and specifically a primer suited for applying adhesives. In a general perspective a primer may be referred to as an undercoat or likewise first coating. It is a preparatory coating which is put on a material surface before applying a further layer, such as an adhesive or a paint. Priming is intended to ensure better adhesion of a further coating to the material surface, and in some instances it may increase durability, and provide additional protection for the material.

To obtain a good adhesion on polymeric and plastic materials is often challenging. Especially as the adhesives may be subjected to environmentally challenging conditions with exposure to heat, cold, rain, snow, de-icing agents, sun, salt, cleaning agents etc. EP 1 905 805 discloses aqueous epoxy resin primer compositions providing improved adhesion for moisture-curing polyurethane adhesives. To get a good adhesion the surfaces of the substrate materials may be treated in advance with for example a corona plasma. This usually improves the adhesive results but after testing under challenging conditions the adhesion may still fail, especially with unsaturated polyester (UP). A comparison is given in table 1 for UP and epoxy resin (EP).

**Table 1: Cataplasm: Substrate and adherent were dried for one week, thereafter the samples were stored for 7 days at 70° and 100% RH. Number is number of days before adhesion loss occurred (adhesion peel test); max = 7. SABA Sealant are commercial available sealant from SABA Dinxperlo BV. UP1/2 and EP1/2 are commercially available substrates from Lamilux GmbH.**

| Substrate | Sealant | After corona treatment | After corona treatment |
|---|---|---|---|
| | | Room temperature aging | Cataplasm aging |
| UP 1 | SABA Sealant 1 | + | 1 |
| UP 1 | SABA Sealant 2 | + | 0 |
| UP 2 | SABA Sealant 1 | + | 0 |
| UP 2 | SABA Sealant 2 | + | 0 |
| EP1 | SABA Sealant 1 | + | 7 |
| EP2 | SABA Sealant 2 | + | 7 |

In addition to the above testing other surfaces c.q. other materials have been tested as well as other sealants. From the above it may be concluded that especially the unsaturated polyester type materials and the like have poor results.

Further measures could be taken to improve the adhesion. A further improvement to the adhesion could in principle be made by applying a suitable primer. Therefore the tests of table 1 were repeated using a universal primer (Supplied by SABA Dinxperlo BV) for plastic substrates. After corona treatment the additional adhesion gain is unfortunately minimal as can be seen from table 2.

**Table 2: Test results of sealants applied to various substrates (see also table 1).**

| Substrate | Sealant | After corona and priming | After corona and priming |
|---|---|---|---|
| | | Room temperature aging | Cataplasm aging |
| UP 1 | SABA Sealant 1 | + | 1 |
| UP 1 | SABA Sealant 2 | + | 1 |
| UP 2 | SABA Sealant 1 | + | 0 |
| UP 2 | SABA Sealant 2 | + | 0 |
| EP1 | SABA Sealant 1 | + | 7 |
| EP2 | SABA Sealant 2 | + | 7 |

In line with the testing as presented in table 1 in addition to the above testing of table 2 other surfaces c.q. other materials have been tested as well as other sealants. From the above it may be concluded that especially the unsaturated polyester type materials and the like have poor results, even if a prior art primer is used. In view of the above there is a need for improved primers, especially primers for polymeric materials such as unsaturated polyesters, polyethers, and the like.

In patent literature various primers can be found. Examples of such documents are WO 2008/061556 A2, US 8,877,955 B2, US 8,507,593 B2, US 8,263,185 B2, EP 1 754 754 B1, US 2015/0376417 A1; and US 02009/297856 A1. These primers are usually based on reactive silyl groups containing amines and mercaptanes, as well as other compositions. Although these might under certain conditions improve the adhesion on e.g. glass, their adhesion on polymers such as UP is not good, certainly not after cataplasm testing, and therefore they are not suited as primer for various applications. In addition their storage stability is too often too limited.

Incidentally some documents recite coating compositions resembling an adhesive composition in terms of generic components. For instance WO 2015/082409 A2 recites a method for providing a metallic or concrete surface of a chemical installation with a coating and specifically a metallic or concrete surface of a chemical installation. The coating composition comprises an epoxy-functional resin, and an amine curing agent for the epoxy-functional resin, wherein the coating composition comprises an organic silicon-containing compound selected from the group of organosilanes and organosiloxanes, with the molar ratio between the silicon atoms of the organic silicon-containing compound and the epoxy-groups in the coating composition being in the range of 0.20- 0.75:1.00. The coating composition shows a wide application spectrum and a high chemical resistance. EP0501916 A2 recites a creosote resistant epoxy adhesive system resistant to creosote for bonding moist and acidic wood to steel comprising (A) a low viscosity primer comprising (a) a resin component comprising diglycidyl ether of Bisphenol A, diglycidyl ether of butanediol, and epoxy silane; and (b) a hardener component comprising an aliphatic amine; and (B) an adhesive component comprising (a) a resin component comprising diglycidyl ether of Bisphenol A, a diluent, a filler, and epoxy silane; and (b) a hardener component comprising a combination of (i) an aliphatic or aromatic amine and (ii) a polyamide or an adducted amine with diglycidyl ether of Bisphenol, and a filler and wherein a flexibilizer is present in either component (a) or component (b) of said adhesive component. JP H01 172467 A recites a one-pack primer composition for a steel substrate with good water-resistant adhesiveness and anti-corrosiveness with a long paint interval comprising an epoxy resin (A) having at least two epoxy groups in the molecule, an amine compound (B), a monoepoxysilane (C) and, optionally, a monoepoxy compound (D) and/or an isocyanate compound (E), and these components are present in a specific ratios. A one-pack convenient primer composition excelling in water-resistant adhesiveness to a steel substrate and anti-corrosiveness and having a long painting interval can be obtained. JP 2007 070585 A recites a primer composition for a sealing material in order to provide a primer layer having excellent toughness and adhesiveness. The primer composition for the sealing material comprises a reaction product (A) and a solvent. The reaction product (A) is prepared by carrying out an addition reaction of an epoxy resin with a secondary amine having a hydrolyzable silyl group. Apart from some chemical similarities of the compositions these documents all relate to coatings, i.e. paints or the like, which are unsuited as a primer for an adhesive. In addition these documents relate to inventions which are different and have a different goal and scope compared to the present invention.

There is therefore a need for improved primers, especially primers for adhesives, in particular adhesives. It is an object of the present invention to provide a primer for an adhesive which overcomes one or more of the above disadvantages, and a method of forming a primer for an adhesive, which is specifically suited for polymeric material, without jeopardizing functionality and advantages.

### SUMMARY OF THE INVENTION

The present invention relates to an improved primer for an adhesive composition according to claim 1, a method of forming said primer according to claim 7, and a use of said primer according to claim 11. Surprisingly it has now been found that a primer based on reactive secondary amines (SA) and epoxy resins (ER), followed by mixing with an epoxide comprising silane (ES) solves this problem. This addition of this epoxide comprising silane is considered a necessity to obtain a functional and storage stable product. In the secondary amine it is considered that the reactive group therein is an alkoxy silyl group; it typically comprises one (mono) or two (di) such alkoxy silyl groups {(R¹,R²)-Si-(OR³)₍₃₋ₙ₎(R⁴)ₙ}. Contrary to the above mentioned primers, the present primers provide good adhesion to various materials, can be used after further treatments such as cataplasm without problems, and have a good storage stability (see for instance table 3 in this respect).

In the present primer 1-60 wt.% reactive secondary amine (SA) is present, preferably 5-50 wt.%, more preferably 10-45 wt.%, such as 20-40 wt.%, 1-60 wt.% epoxy resin (ER), preferably 4-44 wt.%, more preferably 8-40 wt.%, such as 15-35 wt.%, wherein the secondary amine (SA) and epoxy resin (ER) are provided in a molar ratio of functional groups (epoxy groups and amine groups, respectively) (ER):(SA) of 0.5:1 to 10:1, preferably 1:1 to 4:1, more preferably 1.5:1 to 2:1, i.e. typically more ER than SA, 1-30 wt.% epoxy silane (ES) (R⁸-Si-(OR⁶)₍₃₋ₙ₎(OR⁷)ₙ), wherein R8 comprises an epoxide, preferably 2-25 wt.%, more preferably 4-25 wt.%, even more preferably 5-20 wt.%, such as 7-17 wt.%, e.g. 10-12 wt.%, and the remainder solvent, wherein all wt.% are based on a total weight of the primer. The reactive secondary amine is under mixing conditions capable of forming a stable mixture with the epoxy resin. It is noted that an epoxy resin may comprise one or more epoxide groups, and/or the secondary amine may comprise one or more amine groups. In view of characteristics of the primer, such as detailed in the experiments, it is preferred to have more ER than SA. Also an epoxide comprising silane is present, such as glycidyl-silane. It is preferred that an epoxy silane (ES) is reacted and hence present in a ratio of 0,5-5 parts by weight of epoxy resin (ER) to 1 part by weight epoxy silane (ES), preferably 1-3 part by weight epoxy resin (ER) to 1 part by weight silane (ES), i.e. typically epoxy resin is present in a higher amount. The primer comprises a suitable solvent; the solvent is capable of forming a solution with the secondary amine, the epoxy resin, epoxide comprising silane, and reaction products thereof, wherein the solvent is typically inert, i.e. does not take part in any reaction between the aforementioned chemical compounds. It is preferred to use a solvent of which a viscosity of the primer solution, with the chemical compounds, is such that the primer solution can be applied by usual means, such as by spraying, brushing, etc.

The present primer is obtainable and obtained by the present method.

The present method of forming the present primer comprises the steps of (i) providing 1-60 wt.% reactive secondary amine, 1-60 wt.% epoxy resin, and 0.1-10 wt.% catalyst, in a suitable solvent, (ii) reacting the secondary amine and epoxy resin under suitable conditions thereby forming an intermediate product, (iii) adding 1-30 wt.% epoxide comprising silane (ES)(R⁸-Si-(OR⁶)₍₃₋ₙ₎(OR⁷)ₙ) and optional further solvent, preferably in a ratio of 0.5-5 parts by weight of epoxy resin to 1 part by weight epoxide comprising silane, preferably 1-3 part by weight epoxy resin to 1 part by weight silane, and (iv) mixing the intermediate product and epoxide comprising silane (ES) under suitable conditions thereby forming the primer. After providing the secondary amine, the epoxy resin, and the catalyst, the secondary amine and epoxy resin typically form an intermediate product. This intermediate product is often not stable by itself, hence a further step is performed wherein to the intermediate product an epoxide comprising silane is added to form the present primer. The primer is than stable and can be stored for months. In principle the order of the steps could be changed, in so far as applicable.

The present primer finds use in various applications and for various goals.

The present method and primer can be applied to a large range of materials, such as polyurethane, polyalkynes, such as, polyethylene, polypropylene, polyalkenes, polyesters, polyethers, cell rubber (CR), and equivalently to unsaturated polymers thereof, it provides a good contactibility, it is stable at elevated temperatures, it can be applied using relatively simple means, such as with a brush, it provides a strong bond, a good cohesion, a flexible adhesive film, a high storage stability, and good wet tacking, amongst others.

When relative percentages are used, such as wt. %, it is noted that a wt.% is calculated either based on a total composition or, if indicated specifically, on a constituent, etc.

Thereby the present invention provides a solution to one or more of the above mentioned problems.

Advantages of the present description are detailed throughout the description. The teachings and examples of the present invention may be combined into a further not specifically disclosed exemplary embodiment.

### DETAILED DESCRIPTION OF THE INVENTION

In a first aspect the invention relates to a primer according to claim 1.

In the present primer the secondary amine is one or more of H-N-{(R¹,R²)-Si-(OR³) ₍₃₋ₙ₎(R⁴)ₙ}₂ and R⁵-NH-{(R¹,R²)-Si-(OR³)₍₃₋ₙ₎(R⁴)ₙ}, wherein n=0 or 1, R¹, and R² are independently chosen of linear and branched C₁-C₁₅ alkylene groups, such as C₂-C₈ alkylene groups, preferably C₃-C₅ alkylene groups, more preferably propylene, R³, R⁴ and R⁵ are preferably and independently chosen from C₁-C₁₅ alkyl groups, such as C₁-C₈ alkyl groups, such as methyl, ethyl, propyl, butyl, isopropyl, isobutyl, pentyl and tert-butyl. An example is amino-propyl-trimethoxy silane.

In an exemplary embodiment of the present primer the epoxy resin is a reaction product of one or more of a Bisphenol, such as Bisphenol A, Bisphenol AP, Bisphenol B, Bisphenol BP, Bisphenol C, Bisphenol C2, Bisphenol E, Bisphenol F, Bisphenol G, Bisphenol M, Bisphenol P, Bisphenol PH, Bisphenol TMC, Bisphenol Z, preferably Bisphenol A and Bisphenol F, or a molecule comprising said Bisphenol, and further epoxy resins; and at least one further compound, such as epichlorohydrin, wherein the epoxy resin preferably has a molecular weight of <2000 Da, such as < 1500 Da.

In an exemplary embodiment of the present primer the solvent is aprotic. The solvent may be selected from one or more of a carboxylate, such as acetate, such as ethyl acetate, methyl acetate, and propyl acetate, an aromatic, such as an aromatic hydrocarbon, such as xylene, benzene, and toluene, a ketone, an ester, an ether, an alkane, and a hydrocarbon having a ring structure, such as cyclopentane, and cyclohexane, optionally being chlorinated.

In an exemplary embodiment of the present primer the epoxy silane (ES) is R⁸-Si-(OR⁶)₍₃₋ₙ₎(OR⁷)ₙ, wherein R⁶ and R⁷ are independently chosen from C₁-C₁₅ alkyls, such as C₁-C₈ alkyls, such as methyl, ethyl, propyl, butyl, isopropyl, isobutyl, pentyl, and tert-butyl, and wherein R⁸ is independently chosen from a linear or branched C₁-C₁₅ alkylene radical-epoxide, a (poly)oxy (C₁-C₁₅) alkylene radical-epoxide, and glycidyl ether, such as linear or branched C₂-C₈ alkylene radical-epoxide, a (poly)oxy (C₂-C₈) alkylene radical-epoxide, e.g. linear or branched C₃-C₅ alkylene radical-epoxide, a (poly)oxy (C₃-C₅) alkylene radical-epoxide, R⁸ optionally comprising at least one of an ether, a secondary amine group, and a tertiary amine group. Examples are 3-Glycidoxypropyltrimethoxysilane (or trimethoxy[3-(oxiranylmethoxy)propyl-silane). In an alternative representation, which is considered at least largely equivalent with the above, and equally well suitable for the present invention, the epoxy silane (ES) is R⁹-oxirane-R⁸-Si-(OR⁶)₍₃₋ₙ₎(R⁷)ₙ, wherein R⁶, R⁷ and R⁹ are each independently chosen from C₁-C₁₅ as above, e.g. from alkyls, such as methyl, ethyl, propyl, isopropyl, butyl, sec-butyl and tert-butyl and wherein R⁸ is independently chosen from a linear or branched C₁-C₁₅ alkylene group optionally comprising at least one of an ether, a secondary amine group, and a tertiary amine group.

In an exemplary embodiment of the present primer 1-60 wt.% reactive secondary amine is present, preferably 5-50 wt.%, more preferably 10-45 wt.%, such as 20-40 wt.%, 1-60 wt.% epoxy resin, preferably 4-44 wt.%, more preferably 8-40 wt.%, such as 15-35 wt.%, wherein the secondary amine is preferably one or more of H-N-{(R¹,R²)-Si-(OR³)₍₃₋ₙ₎(R⁴)ₙ}₂ and R⁵-NH-{(R¹,R²)-Si-(OR³)₍₃₋ₙ₎(R⁴)ₙ}, wherein n=0 or 1, R¹, R², and R⁵ are independently chosen of linear and branched C₁-C₁₅ alkylene groups, such as C₂-C₈ alkylene groups, preferably C₃-C₅ alkylene groups, more preferably propylene, R³ and R⁴ are preferably and independently chosen from C₁-C₈ alkyl groups, such as C₁-C₅ alkyl groups, such as methyl, ethyl, propyl, butyl, isopropyl, isobutyl and tert-butyl, wherein the secondary amine (SA) and epoxy resin (ER) are provided in a molar ratio of functional groups (epoxy groups and amine groups, respectively) (ER):(SA) of 0.5:1 to 10:1, preferably 1:1 to 4:1, more preferably 1.5:1 to 2:1, i.e. typically more ER than SA, 1-30 wt.% silane (R⁸-Si-(OR⁶)₍₃₋ₙ₎(OR⁷)ₙ) (ES), wherein R⁸ comprises an epoxide, preferably 2-25 wt.%, more preferably 4-25 wt.%, even more preferably 5-20 wt.%, such as 7-17 wt.%, e.g. 10-12 wt.%, wherein R⁶ and R⁷ are independently chosen from C₁-C₈ alkyls, such as methyl, ethyl, propyl, butyl, isopropyl, isobutyl and tert-butyl, and wherein R⁸ is independently chosen from a linear or branched C₁-C₁₅ alkylene radical-epoxide, a (poly)oxy (C₁-C₁₅) alkylene radical-epoxide, and glycidyl ether, such as linear or branched C₂-C₈ alkylene radical-epoxide, a (poly)oxy (C₂-C₈) alkylene radical-epoxide, e.g. linear or branched C₃-C₅ alkylene radical-epoxide, a (poly)oxy (C₃-C₅) alkylene radical-epoxide, R8 optionally comprising at least one of an ether, a secondary amine group, and a tertiary amine group, a silane (ES) is preferably present in a ratio of 0,5-5 parts by weight of epoxy resin (ER) to 1 part by weight silane (ES), preferably 1-3 part by weight epoxy resin (ER) to 1 part by weight silane (ES), the secondary amine is one or more of H-N-{(R¹,R²)-Si-(OR³)₍₃₋ₙ₎(R⁴)ₙ}₂ and R⁵-NH-{(R¹,R²)-Si-(OR³)₍₃₋ₙ₎(R⁴)ₙ}, wherein n=0 or 1, R¹, R², and R⁵ are independently chosen of linear and branched C₁-C₁₅ alkylene groups, such as C₂-C₈ alkylene groups, preferably C₃-C₅ alkylene groups, more preferably propylene, R³ and R⁴ are preferably and independently chosen from C₁-C₈ alkyl groups, such as C₁-C₅ alkyl groups, such as methyl, ethyl, propyl, butyl, isopropyl, isobutyl and tert-butyl, and the remainder solvent, wherein the solvent is preferably aprotic, the solvent may be selected from one or more of a carboxylate, such as acetate, such as ethyl acetate, methyl acetate, and propyl acetate, an aromatic, such as an aromatic hydrocarbon, such as xylene, a ketone, an ester, an ether, an alkane, and a hydrocarbon having a ring structure, such as cyclopentane, and cyclohexane, and optionally being chlorinated.

In a second aspect the invention relates to a method of forming a primer according to claim 6.

In an exemplary embodiment of the present method in step (ii) reacting is carried out during 1 h-100 h, and preferably under mixing, preferably at a temperature of 275-350 K, and preferably under ambient pressure.

In an exemplary embodiment of the present method in step (iv) mixing is carried out in a suitable solvent, wherein the solvent preferably is inert.

In an exemplary embodiment of the present method the solvent comprises one or more of ketones, esters, alkanes, aromatics, such as ethyl acetate and xylene.

In an exemplary embodiment of the present method the catalyst is one or more of a tin comprising catalyst, such as tin octoate, tin butanoate, tin caprate, and tin oleate; organic tin compounds, such as dibutyltin diacetate, dibutyltin dioctoate, dibutyltin dilaurate, dibutyltin dioleate, dioctyltin dilaurate, diphenyltin diacetate, dibutyltin oxide; a reaction product made from tin oxide and a phthalate, such as from dibutyltin oxide, dibutyltin dimethoxide, and dibutyltin(triethoxysiloxy); and tin chelate compounds, such as dibutyltin diacetylacetonate.

In a third aspect the present invention relates to a use of the present primer for adhering a surface of a first material to a surface of a second material, wherein the second material is selected from polymers, and plastics.

In an exemplary embodiment the present use is for obtaining a good adhesion under environmentally extreme conditions, such as in hot (>35 °C) and/or humid (RH>70%) conditions.

The present primer provides the advantages as detailed throughout the description. By varying components and (relative) amounts the present adhesive can be adapted easily, e.g. to requirements for a certain application.

The invention is further detailed by the accompanying examples, which are exemplary and explanatory of nature and are not limiting the scope of the invention. To the person skilled in the art it may be clear that many variants, being obvious or not, may be conceivable falling within the scope of protection, defined by the present claims.

### FIGURES

Figs. 1a,b represent a generic structure of the amino silane according to the invention.
Figs. 2a,b represent a generic structure of the epoxy silane according to the invention.

### DETAILED DESCRIPTION OF THE FIGURES

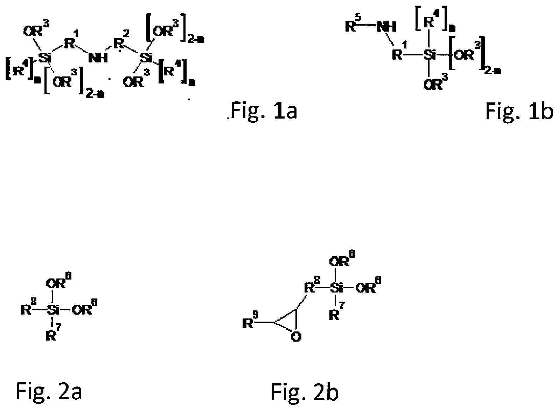

In the figures:
n 0 or 1
R¹, R² linear or branched C₁-C₁₅ alkylene group
R³, R⁴, R⁵ C₁-C₁₅ alkyl
R⁶, R⁷ C₁-C₁₅ alkyl
R⁸ epoxide comprising group, such as linear or branched C₁-C₁₅ alkylene radical-epoxide, a (poly)oxy (C₁-C₁₅) alkylene radical-epoxide, and glycidyl ether, optionally comprising at least one of an ether, a secondary amine group, and a tertiary amine group
R⁹ C₁-C₁₅ alkyl
Figs. 1a,b represent a generic structure of the amino silane (AS) according to the invention. Details of the amino silane are given in the description and claims.
Figs. 2a,b represent a generic structure of the epoxy silane (ES) according to the invention. Details of the epoxy silane are given in the description and claims.

### EXAMPLES

### Preparation of the primer Examples 1, 3, 5 and 7

To a three-necked bottle 19.23g ethyl acetate, 0.39g tin catalyst (Tegokat 423, TIB), 37.22g epoxy resin type (Bisphenol A epoxy polymer in xylene (80% solid) epoxy amount: 3.87 - 4.27 eq/Kg) and 20.47g amino silane (Dynasylan 1124, Evonik) are added under stirring. This mixture is left for three days to allow completion of the reaction between the amino silane and the epoxy resin. To this instable mixture 7.23g (example 1) or 14.46 g (ex. 3, 5, 7) glycidylsilane (Dynasylan Glymo, Evonik) in 15.46g (examples 1,3,5) or 20,00g (ex. 7) ethyl acetate is added.

### Preparation of the primer Examples 2, 4, 6 and 8

To a three-necked bottle 19.23g ethyl acetate, 0.39g tin catalyst (TIB KAT 423), 37.22g epoxy resin (Bisphenol A epoxy polymer in xylene (80% solid) epoxy amount: 3.87 - 4.27 eq/Kg) and 40.94g amino silane (Dynasilan 1124 ex Evonik) are added under stirring. This mixture is left for three days to allow completion of the reaction between the amino silane and the epoxy resin. To this instable mixture 15.46g ethyl acetate (examples 2,4,6) or 20,00g (ex. 8) and 7.23g (example 2) and 14.46 g (ex. 4, 6, 8) glycidylsilane (Dynasylan Glymo, Evonik) are added.

### Preparation of the primer Examples 9-10

Examples 9 and 10 were prepared accordingly to the above examples, with adapted amounts of reactants.

### Description of the present primer

Reaction product of a two-step synthesis dissolved in a solvent mixture, consisting of the reaction product of a reactive silane containing secondary amine of structure 1 and an epoxy resin based on bisphenol F or on bisphenol A with a molecular weight <2000. The ratio amino groups: epoxy groups is preferably between 1:1 and 1:10, more preferably between 1:1 and 1:4, most preferably 1:2. For this reaction a tin-catalyst may be used in a ratio of 0 to 10 wt.%, preferably 0.01 -5 wt.% most preferably 0.1 to 2 wt.%. This reaction product is than reacted with a glycidyl silane of structure 2 in a ratio of 0.5-5 parts by weight of epoxy resin to 1 part by weight glycidyl silane, preferably 1-3 part by weight epoxy resin to 1 part by weight glycidyl silane.

Amounts of constituents of the method of forming the present primer are given in table 3.

**Table 3: Compositions of the present primer.**

| First step | 1 | 2 | 3 | 4 | 5 | 6 | 7 | 8 | 9 | 10 |
|---|---|---|---|---|---|---|---|---|---|---|
| Ethyl acetate | 19.23 | 19.23 | 19.23 | 19.23 | 19,23 | 19,23 | 19,23 | 19,23 | 19,23 | 19,23 |
| Catalyst | 0.39 | 0.39 | 0.39 | 0.39 | 0,39 | 0,39 | 0,39 | 0,39 | 0,39 | 0,39 |
| Epoxy resin | 37.22 | 37.22 | 37.22 | 37.22 | 37,22 | 37,22 | 37,22 | 37,22 | 37,22 | 37,22 |
| Reactive secondary amine | 20.47 | 40.94 | 20.47 | 40.94 | 20,47 | 40,94 | 20,47 | 40,94 | 30,71 | 30,71 |
| Epoxy: amino | 2 | 1 | 2 | 1 | 2 | 1 | 2 | 1 | 1,5 | 1,5 |
| Second step | | | | | | | | | | |
| Ethyl acetate | 15.46 | 15.46 | 15.46 | 15.46 | 15,46 | 15,46 | 20,00 | 20,00 | 17,73 | 17,73 |
| Glycidylsilane | 7.23 | 7.23 | 14.46 | 14.46 | 14,46 | 14,46 | 14,46 | 14,46 | 10,85 | 10,85 |

The amounts in table 3 are in grams. As a catalyst TIB KAT 423 is used.
Table 4 gives test results for the four compositions.

**Table 4: adhesion test results. Number is number of days before adhesion loss occurred (adhesion peel test); max = 7.**

| Test | Before Cataplasm | After Cataplasm |
|---|---|---|
| 1 | 0 | 7 |
| 2 | - | - |
| 3 | + | 7 |
| 4 | - | 4 |
| 5 | + | 7 |
| 6 | - | 7 |
| 7 | + | 7 |
| 8 | - | 5 |
| 9 | - | 7 |
| 10 | + | 7 |

From table 4 it may be concluded that the adhesion is at its best if there is an excess of epoxy groups in the resin versus the amino groups. It is also preferred that a high amount of glycidyl silane is added. It is considered that examples 2, 4 and 8 provide sufficient, but sub-optimal results.

## Claims

1. Primer for an adhesive comprising
1-60 wt.% reactive secondary amine (SA),
1-60 wt.% epoxy resin(ER),
wherein the epoxy resin (ER) and the secondary amine (SA) are provided in a molar ratio of functional groups (epoxy groups and amine groups, respectively) (ER):(SA) of 0.5:1 to 10:1,
1-30 wt.% epoxy silane (ES) (R⁸-Si-(OR⁶)₍₃₋ₙ₎(OR⁷)ₙ), wherein R⁸ comprises an epoxide, and/or wherein R⁶ and R⁷ are each independently chosen from C₁-C₁₅ alkyls, and/or wherein R⁸ is independently chosen from a linear or branched C₁-C₁₅ alkylene radical-epoxide, a (poly)oxy (C₁-C₁₅) alkylene radical-epoxide, and glycidyl ether,
and the remainder solvent, wherein the solvent is one or more of a carboxylate, an aromatic, a ketone, an ester, an ether, an alkane, and a hydrocarbon having a ring structure,
wherein the secondary amine (SA) is one or more of H-N-{(R¹,R²)-Si-(OR³)₍₃₋ₙ₎(R⁴)ₙ}₂ and R⁵-NH-{(R¹)-Si-(OR³)₍₃₋ₙ₎(R⁴)ₙ}, wherein n=0 or 1, R¹, and R² are independently chosen of linear and branched C₁-C₁₅ alkylene groups,
R³, R⁴ and R⁵ are independently chosen from C₁-C₁₅ alkyls,
wherein all wt.% are based on a total weight of the primer.

2. Primer according to claim 1, wherein R³, R⁴ and R⁵ are independently chosen from methyl, ethyl, propyl, butyl, isopropyl, isobutyl and tert-butyl.

3. Primer according to claim 1 or claim 2, wherein the epoxy resin is a reaction product of
one or more of a Bisphenol, such as Bisphenol A, Bisphenol AP, Bisphenol B, Bisphenol BP, Bisphenol C, Bisphenol C2, Bisphenol E, Bisphenol F, Bisphenol G, Bisphenol M, Bisphenol P, Bisphenol PH, Bisphenol TMC, Bisphenol Z, preferably Bisphenol A and Bisphenol F, or a molecule comprising said Bisphenol, and
at least one further compound, such as epichlorohydrin.

4. Primer according to any of the preceding claims,
wherein the solvent is one or more of an acetate, and a hydrocarbon having a ring structure being chlorinated.

5. Primer according to any of the preceding claims,
wherein in the epoxy silane (ES) R⁶-Si-(OR⁶)₍₃₋ₙ₎(OR⁷)ₙ R⁶ and R⁷ are each independently chosen from methyl, ethyl, propyl, butyl, isopropyl, isobutyl and tert-butyl, and/or wherein R⁸ comprises at least one of an ether, a secondary amine group, and a tertiary amine group.

6. Method of forming a primer according to any of the preceding claims, comprising the steps of
(i) providing 1-60 wt.% reactive secondary amine (SA), 1-60 wt.% epoxy resin (ER), and 0.1-10 wt.% catalyst, in a suitable solvent,
(ii) reacting the secondary amine (SA) and epoxy resin (ER) under suitable conditions thereby forming an intermediate product,
(iii) adding 1-30 wt.% epoxy silane (ES) (R⁸-Si-(OR⁶)₍₃₋ₙ₎(OR⁷)ₙ), wherein R⁸ comprises an epoxide, and optional further solvent, and
(iv) mixing the intermediate product and epoxy silane (ES) under suitable conditions thereby forming the primer.

7. Method according to claim 6, wherein in step (ii) reacting is carried is during 1 h-100 h, and preferably under mixing, preferably at a temperature of 275-350 K (2-77 °C), and preferably under ambient pressure.

8. Method according to claim 6 or claim 7, wherein in step (iv) reacting is carried out in a suitable solvent, wherein the solvent preferably is inert.

9. Method according to claim 8, wherein the solvent comprises one or more of ketones, esters, alkanes, and aromatics.

10. Method according to any of claims 7-9, wherein the catalyst is one or more of a tin comprising catalyst, such as tin octoate, tin butanoate, tin caprate, and tin oleate; organic tin compounds, such as dibutyltin diacetate, dibutyltin dioctoate, dibutyltin dilaurate, dibutyltin dioleate, dioctyltin dilaurate, diphenyltin diacetate, dibutyltin oxide; a reaction product made from tin oxide and a phthalate, such as from dibutyltin oxide, dibutyltin dimethoxide, and dibutyltin-(triethoxysiloxy); and tin chelate compounds, such as dibutyltin diacetylacetonate.

11. Use of a primer according to any of claims 1-5 or obtainable by a method according to any of claims 6-10, for adhering a surface of a first material to a surface of a second material, wherein the second material is selected from polymers, and plastics.

12. Use of a primer according to any of the claims 1-5, for obtaining a good adhesion under environmentally extreme conditions, such as in hot (>35 °C) and/or humid (RH>70%) conditions.

## Patentansprüche

1. Primer für einen Klebstoff, umfassend
1-60 Gew.-% reaktives sekundäres Amin (SA),
1-60 Gew.-% Epoxidharz (ER),
wobei das Epoxidharz (ER) und das sekundäre Amin (SA) in einem molaren Verhältnis der funktionellen Gruppen (Epoxidgruppen beziehungsweise Aminogruppen) (ER):(SA) von 0,5:1 bis 10:1 bereitgestellt werden,
1-30 Gew.-% Epoxysilan (ES) (R⁸-Si-(OR⁶)₍₃₋ₙ₎(OR⁷)ₙ), wobei R⁸ ein Epoxid umfasst, und/oder wobei R⁶ und R⁷ jeweils unabhängig voneinander aus C₁-C₁₅-Alkylen ausgewählt sind, und/oder wobei R⁸ unabhängig voneinander aus einem linearen oder verzweigten C₁-C₁₅-Alkylenradikalepoxid, einem (Poly)oxy-(C₁-C₁₅)alkylenradikalepoxid und Glycidylether ausgewählt ist,
und der Rest Lösungsmittel, wobei das Lösungsmittel eines oder mehrere aus einem Carboxylat, einem Aromaten, einem Keton, einem Ester, einem Ether, einem Alkan und einem Kohlenwasserstoff mit einer Ringstruktur ist,
wobei das sekundäre Amin (SA) eines oder mehrere von H-N-{(R¹,R²)-Si-(OR³)₍₃₋ₙ₎(R⁴)ₙ}₂ und R⁵-NH-{(R¹)-Si-(OR³)₍₃₋ₙ₎(R⁴)ₙ} ist, wobei n=0 oder 1, R¹ und R² unabhängig voneinander aus linearen und verzweigten C₁-C₁₅-Alkylengruppen ausgewählt sind, R³, R⁴ und R⁵ werden unabhängig voneinander aus C₁-C₁₅-Alkylen ausgewählt,
wobei alle Gew.-% auf ein Gesamtgewicht des Primers bezogen sind.

2. Primer nach Anspruch 1, wobei R³, R⁴ und R⁵ unabhängig voneinander aus Methyl, Ethyl, Propyl, Butyl, Isopropyl, Isobutyl und tert.-Butyl ausgewählt sind.

3. Primer nach Anspruch 1 oder Anspruch 2, wobei das Epoxidharz ein Reaktionsprodukt ist von
eines oder mehrere Bisphenole, wie Bisphenol A, Bisphenol AP, Bisphenol B, Bisphenol BP, Bisphenol C, Bisphenol C2, Bisphenol E, Bisphenol F, Bisphenol G, Bisphenol M, Bisphenol P, Bisphenol PH, Bisphenol TMC, Bisphenol Z, vorzugsweise Bisphenol A und Bisphenol F, oder ein Molekül, das dieses Bisphenol enthält, und
mindestens eine weitere Verbindung, wie zum Beispiel Epichlorhydrin.

4. Primer nach einem der vorstehenden Ansprüche, wobei das Lösungsmittel eines oder mehrere aus einem Acetat und einem Kohlenwasserstoff mit einer Ringstruktur ist, die chloriert ist.

5. Primer nach einem der vorstehenden Ansprüche, wobei in dem Epoxysilan (ES) R⁸-Si-(OR⁶)₍₃₋ₙ₎(OR⁷)ₙR⁶ und R⁷ jeweils unabhängig voneinander aus Methyl, Ethyl, Propyl, Butyl, Isopropyl, Isobutyl und tert.-Butyl ausgewählt sind, und/oder wobei R8 mindestens einen Ether, eine sekundäre Aminogruppe oder eine tertiäre Aminogruppe umfasst.

6. Verfahren zur Bildung eines Primers nach einem der vorstehenden Ansprüche, umfassend die folgenden Schritte
(i) Bereitstellung von 1-60 Gew.-% reaktivem sekundärem Amin (SA), 1-60 Gew.-% Epoxidharz (ER) und 0,1-10 Gew.-% Katalysator in einem geeigneten Lösungsmittel,
(ii) Reaktion des sekundären Amins (SA) und des Epoxidharzes (ER) unter geeigneten Bedingungen, wodurch ein Zwischenprodukt gebildet wird,
(iii) Zugabe von 1-30 Gew.-% Epoxysilan (ES) (R⁸-Si-(OR⁶)₍₃₋ₙ₎(OR⁷)ₙ), wobei R⁸ ein Epoxid umfasst, und gegebenenfalls eines weiteren Lösungsmittels, und
(iv) Mischen des Zwischenprodukts und Epoxysilan (ES) unter geeigneten Bedingungen, wodurch der Primer gebildet wird.

7. Verfahren nach Anspruch 6, wobei in Schritt (ii) das Reagieren während 1 h-100 h, und vorzugsweise unter Mischen, vorzugsweise bei einer Temperatur von 275-350 K (2-77 °C) und vorzugsweise unter Umgebungsdruck, durchgeführt wird.

8. Verfahren nach Anspruch 6 oder 7, wobei in Schritt (iv) die Reaktion in einem geeigneten Lösungsmittel durchgeführt wird, wobei das Lösungsmittel vorzugsweise inert ist.

9. Verfahren nach Anspruch 8, wobei das Lösungsmittel einem oder mehreren Ketonen, Estern, Alkanen und Aromaten umfasst.

10. Verfahren nach einem der Ansprüche 7-9, wobei der Katalysator ein oder mehrere Zinn(e) ist, umfassend einen Katalysator, wie Zinnoctoat, Zinnbutanoat, Zinncaprat und Zinnoleat; organische Zinnverbindungen, wie Dibutylzinndiacetat, DibutylZinndioctoat, Dibutylzinndilaurat, Dibutylzinndioleat, Dioctylzinndilaurat, Diphenylzinndiacetat, Dibutylzinnoxid; ein Reaktionsprodukt aus Zinnoxid und einem Phthalat, wie zum Beispiel aus Dibutylzinnoxid, Dibutylzinndimethoxid und Dibutylzinn-(Triethoxysiloxy); und Zinnchelatverbindungen, wie zum Beispiel Dibutylzinndiacetylacetonat.

11. Verwendung eines Primers nach einem der Ansprüche 1 bis 5 oder erhältlich durch ein Verfahren nach einem der Ansprüche 6 bis 10 zum Anhaften einer Oberfläche eines ersten Materials an eine Oberfläche eines zweiten Materials, wobei das zweite Material aus Polymeren, und Kunststoffen ausgewählt ist.

12. Verwendung eines Primers nach einem der Ansprüche 1-5 zur Erzielung einer guten Haftung unter extremen Umweltbedingungen, wie zum Beispiel unter heißen (>35 °C) und/oder feuchten (RH>70%) Bedingungen.

## Revendications

1. Un apprêt pour un adhésif comprenant
1-60 % en poids d'amine secondaire réactive (SA),
1 à 60 % en poids de résine époxy (ER),
dans laquelle la résine époxy (ER) et l'amine secondaire (SA) sont fournies dans un rapport molaire des groupes fonctionnels (groupes époxy et groupes amine, respectivement) (ER) :(SA) de 0,5:1 à 10:1,
1 à 30 % en poids d'époxysilane (ES) (R⁸-Si-(OR⁶)₍₃₋ₙ₎(OR⁷)ₙ), dans lequel R8 comprend un époxyde, et/ou dans lequel R6 et R7 sont chacun indépendamment choisis parmi les alkyles en C₁-C₁₅, et/ou dans lequel R8 est indépendamment choisi parmi un radical-époxyde d'alkylène en C₁-C₁₅ linéaire ou ramifié, un radical-époxyde de (poly)oxy(alkylène en C₁-C₁₅) et l'éther glycidylique,
et le reste du solvant, dans lequel le solvant est un ou plusieurs d'un carboxylate, d'un aromatique, d'une cétone, d'un ester, d'un éther, d'un alcane et d'un hydrocarbure ayant une structure cyclique,
dans laquelle l'amine secondaire (SA) est un ou plusieurs des groupes H-N-{(R¹,R²)-Si-(OR³)₍₃₋ₙ₎(R⁴)ₙ}₂ et R⁵-NH-{(R¹)-Si-(OR³)₍₃₋ₙ₎(R⁴)ₙ} où n=0 ou 1, R¹ et R² sont choisis indépendamment parmi les groupes alkylène en C₁-C₁₅ linéaires et ramifiés, R³, R⁴ et R⁵ sont choisis indépendamment parmi les alkyles en C₁-C₁₅,
où tous les pourcentages en poids sont basés sur le poids total de l'apprêt.

2. Un apprêt selon la revendication 1, dans lequel R³, R⁴ et R⁵ sont choisis indépendamment parmi les groupes méthyle, éthyle, propyle, butyle, iso-propyle, isobutyle et tert-butyle.

3. Un apprêt selon la revendication 1 ou la revendication 2, dans lequel la résine époxy est un produit de réaction de
un ou plusieurs bisphénols, tels que le bisphénol A, le bisphénol AP, le bisphénol B, le bisphénol BP, le bisphénol C, le bisphénol C2, le bisphénol E, le bisphénol F, le bisphénol G, le bisphénol M, le biphénol P, le bisphénol PH, le bisphénol TMC, le bisphénol Z, de préférence le bisphénol A et le bisphénol F, ou une molécule comprenant ledit bisphénol, et
au moins un autre composé, tel que l'épichlorhydrine.

4. Un apprêt selon l'une des revendications précédentes, dans lequel le solvant est un ou plusieurs d'un acétate et d'un hydrocarbure ayant une structure cyclique chlorée.

5. Un apprêt selon l'une quelconque des revendications précédentes, dans lequel dans l'époxysilane (ES) R⁸-Si-(OR⁶)₍₃₋ₙ₎(OR⁷)ₙ R⁶ et R⁷ sont chacun indépendamment choisis parmi les groupes méthyle, éthyle, propyle, butyle, isopropyle, isobutyle et tert-butyle, et/ou dans lequel R8 com-prend au moins un parmi un éther, un groupe amine secondaire, et un groupe amine tertiaire.

6. Procédé de formation d'un apprêt selon l'une quelconque des revendications précédentes, comprenant les étapes suivantes
(i) fournir 1 à 60 % en poids d'amine secondaire réactive (SA), 1 à 60 % en poids de résine époxy (ER) et 0,1 à 10 % en poids de catalyseur, dans un solvant approprié,
(ii) faire réagir l'amine secondaire (SA) et la résine époxy (ER) dans des conditions appropriées, formant ainsi un produit intermédiaire,
(iii) l'addition de 1 à 30 % en poids d'époxysilane (ES) (R⁸-Si-(OR⁶)₍₃₋ₙ₎(OR⁷)ₙ), dans lequel R⁸ comprend un époxyde, et d'un solvant facultatif de type éther de fourrure, et
(iv) mélanger le produit intermédiaire et l'époxysilane (ES) dans des conditions appropriées, formant ainsi l'apprêt.

7. Procédé selon la revendication 6, dans lequel, dans l'étape (ii), la réaction est effectuée pendant 1 h à 100 h, et de préférence sous mélange, de préférence à une température de 275-350 K (2-77 °C), et de préférence sous pression ambiante.

8. Procédé selon la revendication 6 ou la revendication 7, dans lequel, dans l'étape (iv), la réaction est effectuée dans un solvant approprié, dans lequel le solvant est de préférence inerte.

9. Procédé selon la revendication 8, dans lequel le solvant comprend une ou plusieurs des cétones, des esters, des alcanes et des composés aromatiques.

10. Procédé selon l'une des revendications 7 à 9, dans lequel le catalyseur est un ou plusieurs des éléments suivants : un catalyseur comprenant de l'étain, tel que l'octoate d'étain, le butanoate d'étain, le caprate d'étain et l'oléate d'étain ; des composés organiques de l'étain, tels que le diacétate de dibutylétain, le dioctoate de dibu-tylétain, le dilaurate de dibutylétain, le dioléate de dibutylétain, le dilaurate de dioctylétain, le diacétate de diphénylétain, l'oxyde de dibutylétain ; un produit de réaction fabriqué à partir d'oxyde d'étain et d'un phtalate, tel que l'oxyde de dibutylétain, le diméthoxyde de dibutylétain et le dibutylétain-(triéthoxysiloxy) ; et des composés de chélate d'étain, tels que le diacétylacétonate de dibutylétain.

11. Utilisation d'un apprêt selon l'une des revendications 1 à 5 ou pouvant être obtenu par un procédé selon l'une des revendications 6 à 10, pour faire adhérer une surface d'un premier matériau à une surface d'un second matériau, dans lequel le second matériau est choisi parmi les polymères et les plastiques.

12. Utilisation d'un apprêt selon l'une des revendications 1-5, pour obtenir une bonne adhérence dans des conditions environnementales extrêmes, telles que des conditions chaudes (>35 °C) et/ou humides (HR>70 %).
